(19) Europäisches Patentamt

European Patent Office

Office européen des brevets

(11) **EP 1 089 448 A2**

(12) **EUROPEAN PATENT APPLICATION**

(43) Date of publication:
04.04.2001 Bulletin 2001/14

(51) Int. Cl.⁷: $H04B\ 1/40$

(21) Application number: 00119316.8

(22) Date of filing: 06.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 30.09.1999 JP 28049499

(71) Applicant:
**KABUSHIKI KAISHA TOSHIBA**
**Kawasaki-shi, Kanagawa-ken 210-8572 (JP)**

(72) Inventors:
• **Chiba, Norimichi,**
**Toshiba Kabushiki Kaisha**
**Minato-ku Tokyo 105-8001 (JP)**
• **Takaoka, Toshiaki,**
**Toshiba Kabushiki Kaisha**
**Minato-ku Tokyo 105-8001 (JP)**

(74) Representative: **HOFFMANN - EITLE**
**Patent- und Rechtsanwälte**
**Arabellastrasse 4**
**81925 München (DE)**

(54) **Mobile communication apparatus**

(57) A first transmission/reception antenna (301) of a first radio unit and a second transmission/reception antenna (302) of a second radio unit are arranged different end portions in the longitudinal direction of a case (300). When the two antennas (301, 302) are arranged at separate positions not to interfere with each other, both spatial interference and conductive interference can be reduced, and consequently, degradation in radio characteristic due to interference between the radio units can be prevented.

FIG. 9

EP 1 089 448 A2

## Description

The present invention relates to a mobile communication apparatus such as a cellular phone or PHS (Personal Handy Phone System) and, more particularly, to a mobile communication apparatus having two radio units capable of parallelly performing transmission/reception.

In recent years, a communication system incorporating two radio units has been developed. For example, a cellular phone incorporating a radio unit of Bluetooth has been known. The Bluetooth is a radio communication system complying with the short-distance radio communication standard and realizes about 10-m radio communication using a radio wave in the 2.45 GHz band. This Bluetooth can connect eight terminals at maximum. These terminals form a network called a piconet in which one terminal functions as a master, and the remaining terminals function as slaves. Connection of a terminal in the piconet is authenticated using a password called a PIN (Personal Identification Number) code.

In a terminal having such a Bluetooth as the second radio unit separately from the first radio unit such as a cellular phone, the two radio units parallelly perform transmission/reception. Hence, the radio characteristic may degrade due to interference between the radio units.

More specifically, in an apparatus having a radio unit for cellular phone and a radio unit for Bluetooth, the Bluetooth transmission signal interferes with the cellular phone reception antenna and reception circuit and influences the cellular phone reception signal, resulting in degradation in error rate during demodulation.

Interference between the radio units can be roughly classified into spatial interference and conductive interference. In spatial interference, a radio wave radiated from the antenna of one radio unit runarounds or undesirably reaches to and interferes with the antenna of the other radio unit. In conductive interference, a current generated by one radio unit runarounds or undesirably reaches to and interferes with the other radio unit through the interconnection pattern on the printed board on which the two radio units are mounted.

These influences will cause a serious problem for an apparatus such as a mobile communication terminal having two radio units.

It is an object of the present invention to provide a mobile communication apparatus having two radio units capable of parallelly performing transmission/reception, which reduces interference between the radio units and, more particularly, interference between the antennas and prevents degradation in radio characteristic due to the interference.

In order to solve the above problem, according to the present invention, there is provided a mobile communication apparatus having, in a single case, first radio communication unit constructed by a first transmission/reception circuit section and first transmission/reception antenna to perform radio communication with a base station using a first radio frequency band, and second radio communication unit constructed by a second transmission/reception circuit section and second transmission/reception antenna to perform radio communication with a radio station or another communication apparatus of the first radio communication unit using a second radio frequency band different from the first radio frequency band, wherein the antenna mounting structure is designed to reduce interference (both or one of spatial interference and conductive interference) between the first and second transmission/reception antennas.

Detailed structures will be described below.

As the first solution, the first transmission/reception antenna of the first radio communication unit and the second transmission/reception antenna of the second radio communication unit are arranged at separate positions not to interfere with each other. More specifically, the first transmission/reception antenna and the second transmission/reception antenna are arranged at different end portions in a longitudinal direction of the case.

As the second solution, the two antennas are so arranged that the radiation pattern of the first transmission/reception antenna of the first radio communication unit has a null directed to the second transmission/reception antenna of the second radio communication unit, and the radiation pattern of the second transmission/reception antenna has a null directed to the first transmission/reception antenna of the first radio communication unit.

As the third solution, one of the first and second radio communication units is incorporated in the case, and the other radio communication unit is detachable from the case. For example, the other radio communication unit is mounted in a separated card-shaped member and inserted into the case through a slot formed in the case.

As the fourth solution, a ground pattern of a printed board on which the first radio communication unit is mounted and a ground pattern of a printed board on which the second radio communication unit is mounted are separated from each other. For example, the printed board on which the first radio communication unit is mounted and the printed board on which the second radio communication unit is mounted are individually arranged as separate boards, or the printed board on which the first radio communication unit is mounted and the printed board on which the second radio communication unit is mounted are arranged as one board, and the ground patterns of the printed boards are separately formed.

According to the first solution, when the distance between the first transmission/reception antenna and second transmission/reception antenna is increased, both the spatial interference and conductive interference can be reduced, and consequently, degradation in radio characteristic due to interference between the radio units can be prevented.

According to the second solution, the two antennas are arranged in the case such that a radiation pattern of the first transmission/reception antenna has a null directed to the second transmission/reception antenna, and a radiation pattern of the second transmission/reception antenna has a null directed to the first transmission/reception antenna. So, it is possible that the level of the radio wave transmitted from the second transmission/reception antenna becomes much lower at the first transmission/reception antenna.

Similarly, it is possible that the level of the radio wave transmitted from the first transmission/reception antenna becomes much lower at the second transmission/reception antenna. Hence, the spatial interference as one of interference elements can be reduced, and degradation in radio characteristic due to interference between the radio units can be prevented.

According to the third solution, when one of the first and second radio communication units is incorporated in the case while the other radio communication unit is detachable from the case, the ground pattern of the printed board on which the first radio communication unit is mounted and the ground pattern of the printed board on which the second radio communication unit is mounted can be physically separated from each other. When the ground patterns of the two printed boards are separated, the current generated when one of the radio communication units is operated does not flow into the other radio communication unit through the interconnection pattern. That is, the path of interference with each transmission/reception circuit section can be cut off. Hence, the conductive interference as one of interference elements can be reduced, and degradation in radio characteristic due to interference between the radio units can be prevented.

According to the fourth solution, the ground pattern of the printed board on which the first radio communication unit is mounted and the ground pattern of the printed board on which the second radio communication unit is mounted are separated from each other. This makes it possible to cut off the path of interference with each transmission/reception circuit section, as in the third solution. Hence, the conductive interference as one of interference factors can be reduced, and degradation in radio characteristic due to interference between the radio units can be prevented.

According to the present invention, in a mobile communication apparatus having two different radio units, interference (both or one of spatial interference and conductive interference) between the transmission/reception antennas of these radio units is reduced. With this arrangement, even when the radio units are simultaneously operated, satisfactory communication can be performed by preventing degradation in radio characteristic due to interference between the radio units.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view showing the arrangement of a communication system using communication terminals each having two radio units;
FIG. 2 is a view showing an arrangement example of a radio LAN;
FIG. 3 is a schematic view of a printed board on which two radio units are mounted;
FIGS. 4A and 4B are views for explaining interference between radio units, in which FIG. 4A is a view for explaining spatial interference, and FIG. 4B is a view for explaining conductive interference;
FIGS. 5A and 5B are block diagrams showing the general arrangements of transmission/reception circuit sections and transmission/reception antennas of radio units, in which FIG. 5A is a block diagram showing the arrangement of the first radio unit, and FIG. 5B is a block diagram showing the arrangement of the second radio unit;
FIG. 6 is a graph showing the input-to-output characteristic (saturation characteristic) of a reception RF amplifier;
FIG. 7 is a graph showing the frequency relationship between the input and output signals of the reception mixer;
FIG. 8 is a view showing the antenna mounting structure of a mobile communication terminal according to the first embodiment of the present invention;
FIG. 9 is a view showing the antenna mounting structure of a mobile communication terminal according to the second embodiment of the present invention;
FIGS. 10A and 10B are views showing radiation patterns of the transmission/reception antennas obtained by the antenna mounting structure of the second embodiment;
FIG. 11 is a view showing the antenna mounting structure of a mobile communication terminal according to the third embodiment of the present invention;
FIGS. 12A and 12B are views showing examples of insertion direction of a card-type radio unit in the third embodiment;
FIGS. 13A through 13C are views showing examples of insertion form of the card-type radio unit in the third embodiment; and
FIGS. 14A through 14D are views showing the antenna mounting structures of a mobile communication terminal according to the fourth embodiment of the present invention.

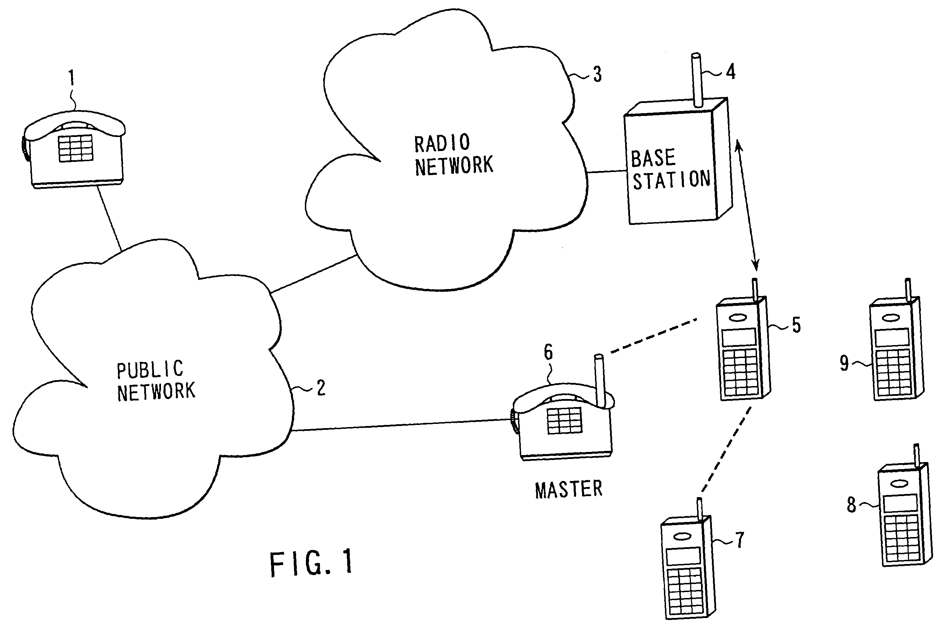

Before a description of the embodiments of the present invention, a communication terminal having two radio units will be described first with reference to FIG. 1.

FIG. 1 is a view showing the arrangement of a communication system using communication terminals each having two radio units. As shown in FIG. 1, the communication system comprises a communication terminal 1 on the other party side, a public network 2, a radio network 3, a base station 4, a communication terminal 5 having two radio units, a master 6 connected to a cable, and remaining communication terminals 7 through 9. The master 6 and the remaining communication terminals 7 through 9 construct a radio network together with the communication terminal 5.

The communication terminal 5 is a mobile communication terminal apparatus such as a cellular phone or PHS. The communication terminal 5 has, at least, a first radio unit for performing radio communication with the base station 4 using a radio wave having a predetermined radio frequency band, and a second radio unit for performing radio communication with one of the remaining communication terminals 7 through 9 or the master 6 connected to the cable using a radio wave having a radio frequency band different from that of the first radio unit. The two radio units can simultaneously operate.

For example, when a communication request from the communication terminal as the other party is received by the communication terminal 5, the communication terminal 5 connects the channel to the base station 4 by the first radio unit. This enables voice communication or the like between the two terminals. At this time, the communication terminal 5 can activate the second radio unit different from the first radio unit to connect one of the remaining communication terminals 7 through 9 or the master 6 connected to the cable.

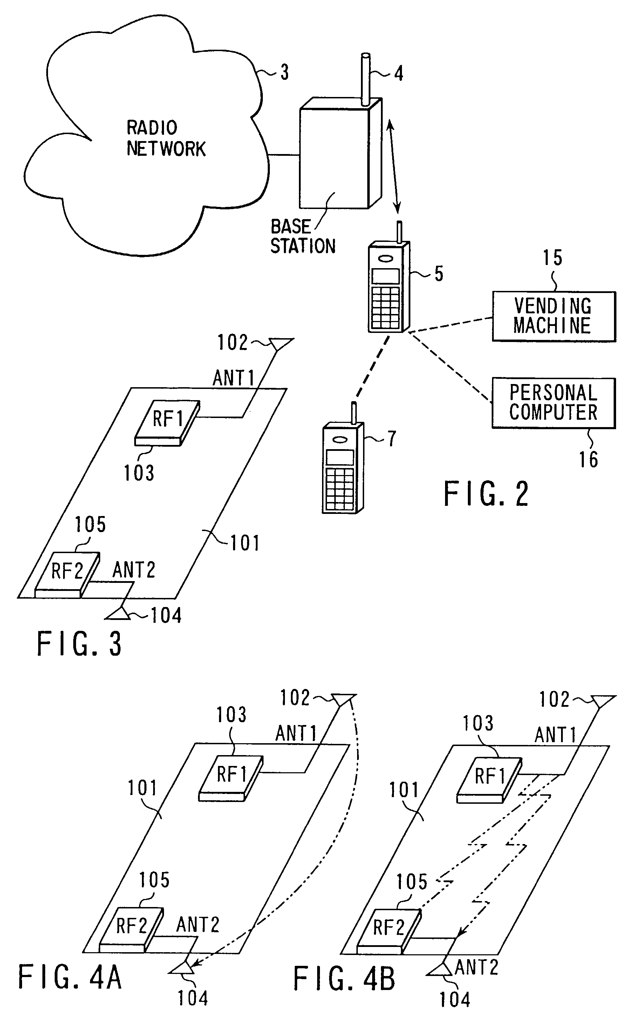

Alternatively, as shown in FIG. 2, a radio LAN (Local Area Network) may be constructed by connecting the first radio unit of the communication terminal 5 to the base station 4 and the second radio unit to a radio unit incorporated in a vending machine 15, a radio unit incorporated in a personal computer 16, or the communication terminal 7 or the like.

Since the communication terminal 5 has two radio units, the radio characteristic degrades due to interference between the radio units. The degradation in radio characteristic due to interference between the radio units will be described below with reference to FIGS. 3 through 7.

FIG. 3 is a schematic view of a printed board on which two radio units are mounted.

Referring to FIG. 3, reference numeral 101 denotes a printed board on which the first and second radio units are mounted; 102, a transmission/reception antenna of the first radio unit; 103, a transmission/reception circuit section of the first radio unit; 104, a transmission/reception antenna of the second radio unit; and 105, a transmission/reception circuit section of the second radio unit.

Problems of interference between the radio units can be roughly classified into two types.

The first problem of interference is spatial interference. FIG. 4A is a view schematically showing the mechanism of spatial interference. In the spatial interference, a radio wave radiated from the antenna of one radio unit runarounds and interferes with the antenna of the other radio unit.

More specifically, as shown in FIG. 4A, a radio wave radiated into the space from the transmission/reception antenna 102 of the first radio unit may runaround and interfere with the transmission/reception antenna 104 of the second radio unit, Similarly, a radio wave radiated into the space from the transmission/reception antenna 104 of the second radio unit may runaround and interfere with the transmission/reception antenna 102 of the first radio unit.

The second problem of interference is conductive interference. FIG. 4B is a view schematically showing the mechanism of conductive interference. In the conductive interference, a current generated by one radio unit runarounds and interferes with the other radio unit through the interconnection pattern on the printed board on which the two radio units are mounted.

More specifically, as shown in FIG. 4B, a current generated in the interconnection pattern on the printed board when the input terminal of the first radio unit is driven may flow to the second radio unit and influence it. Similarly, a current generated in the interconnection pattern on the printed board when the input terminal of the second radio unit is driven may flow to the first radio unit and influence it.

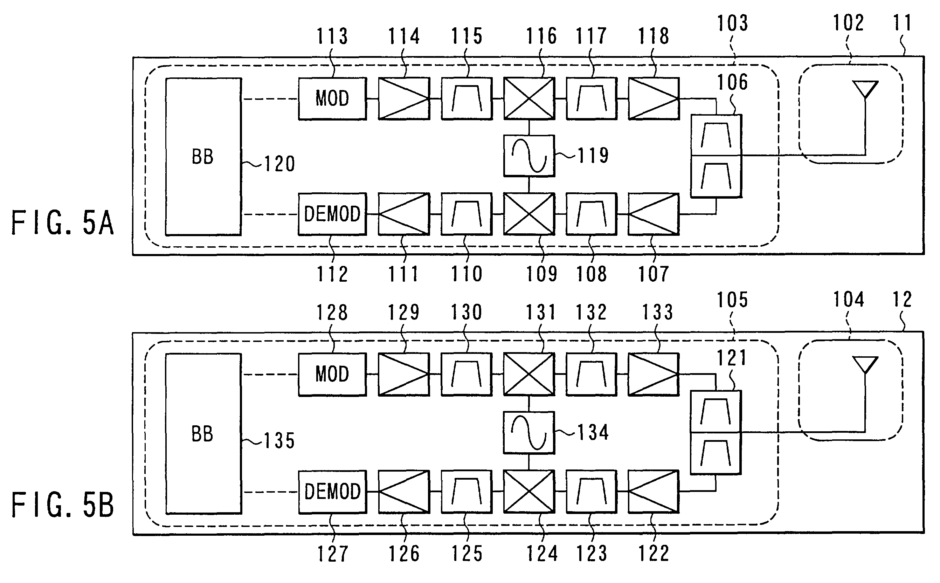

Degradation in radio characteristic due to such interference between the radio units will be described next with reference to FIGS. 5A through 7.

FIGS. 5A and 5B are block diagrams showing the general arrangements of transmission/reception circuit sections and transmission/reception antennas of radio units, in which FIG. 5A shows the arrangement of a first radio unit 11, and FIG. 5B shows the arrangement of a second radio unit 12.

The first radio unit 11 comprises the transmission/reception antenna 102 and transmission/reception circuit section 103. The transmission/reception circuit section 103 has a duplexer 106, reception RF amplifier 107, reception RF filter 108, reception mixer 109, reception IF filter 110, reception IF amplifier 111, demodulator 112, modulator 113, transmission IF amplifier 114, transmission IF filter 115, transmission mixer 116, transmission RF filter 117, transmission RF amplifier 118, local oscillation section 119, and baseband processing section 120.

The duplexer 106 is an antenna multiplexer constructed by the reception RF filter for passing only the reception radio frequency band and the transmission RF filter for passing only the transmission radio frequency band. The reception RF amplifier 107 amplifies a signal having the reception radio frequency. The reception RF filter 108 passes only the reception radio frequency band. The reception mixer 109 converts a signal having the reception radio frequency into a reception intermediate frequency. The reception IF filter 110 passes only the reception intermediate frequency band. The reception IF amplifier 111 amplifies a signal in the reception intermediate frequency band. The demodulator 112 demodulates a reception signal. The modulator 113 modulates a transmission signal. The transmission IF amplifier 114 amplifies a signal having the transmission intermediate frequency. The transmission IF filter 115 passes only the transmission intermediate frequency band. The transmission mixer 116 converts a signal having the transmission intermediate frequency into the transmission radio frequency. The transmission RF filter 117 passes only the transmission radio frequency band. The transmission RF amplifier 118 amplifies a signal having the transmission radio frequency. The local oscillation section 119 generates a local oscillation signal. The baseband processing section 120 performs baseband processing.

Operation of the reception system of this arrangement will be described first.

A signal received by the transmission/reception antenna 102 is input to the duplexer 106. The duplexer 106 removes signal components outside the reception radio frequency band and outputs the signal to the reception RF amplifier 107. The reception RF amplifier 107 amplifies the received signal to a desired level and outputs the amplified signal to the reception RF filter 108. The reception RF filter 108 removes signal components outside the reception radio frequency band of the received signal and outputs the signal to the reception mixer 109. The reception mixer 109 mixes the received signal with a local oscillation signal generated by the local oscillation section 119 to convert the received signal into the reception intermediate frequency band, and outputs the converted signal to the reception IF filter 110. The reception IF filter 110 removes signal components outside the reception intermediate frequency band of the received signal and outputs the signal to the reception IF amplifier 111. The reception IF amplifier 111 amplifies the received signal to a desired level and outputs the amplified signal to the demodulator 112. The demodulator 112 demodulates the received signal and outputs the demodulated signal to the baseband processing section 120.

Operation of the transmission system will be described next.

A baseband signal generated by the baseband processing section 120 is input to the modulator 113. The modulator 113 modulates the received signal and outputs the modulated signal to the transmission IF amplifier 114. The transmission IF amplifier 114 amplifies the received signal to a desired level and outputs the amplified signal to the transmission IF filter 115. The transmission IF filter 115 removes signal components outside the transmission intermediate frequency band of the received signal and outputs the signal to the transmission mixer 116. The transmission mixer 116 mixes the received signal with a local oscillation signal generated by the local oscillation section 119 to convert the transmission signal into the transmission radio frequency band, and outputs the converted signal to the transmission RF filter 117. The transmission RF filter 117 removes signal components outside the transmission radio frequency band of the received signal and outputs the signal to the transmission RF amplifier 118. The transmission RF amplifier 118 amplifies the received signal to a desired level and outputs the amplified signal to the duplexer 106. The duplexer 106 removes signal components outside the transmission radio frequency band of the received signal and outputs the signal to the transmission/reception antenna 102. The transmission/reception antenna 102 radiates the received signal to the space.

The transmission and reception operations of the first radio unit 11 have been described above.

The second radio unit 12 has the same arrangement as that of the first radio unit 11. More specifically, the second radio unit 12 comprises the transmission/reception antenna 104 and transmission/reception circuit section 105. The transmission/reception circuit section 105 has a duplexer 121, reception RF amplifier 122, reception RF filter 123, reception mixer 124, reception IF filter 125, reception IF amplifier 126, demodulator 127, modulator 128, transmission IF amplifier 129, transmission IF filter 130, transmission mixer 131, transmission RF filter 132, transmission RF amplifier 133, local oscillation section 134, and baseband processing section 135. The transmission and reception operations of the second radio unit 12 are the same as those of the first radio unit 11, and a detailed description thereof will be omitted.

Examples of degradation in radio characteristic due to interference between the radio units will be described.

As the first example of degradation in radio characteristic due to interference between the radio units, degradation in radio characteristic due to saturation in the circuit will be described by exemplifying the reception RF amplifier 107 in the first radio unit 11.

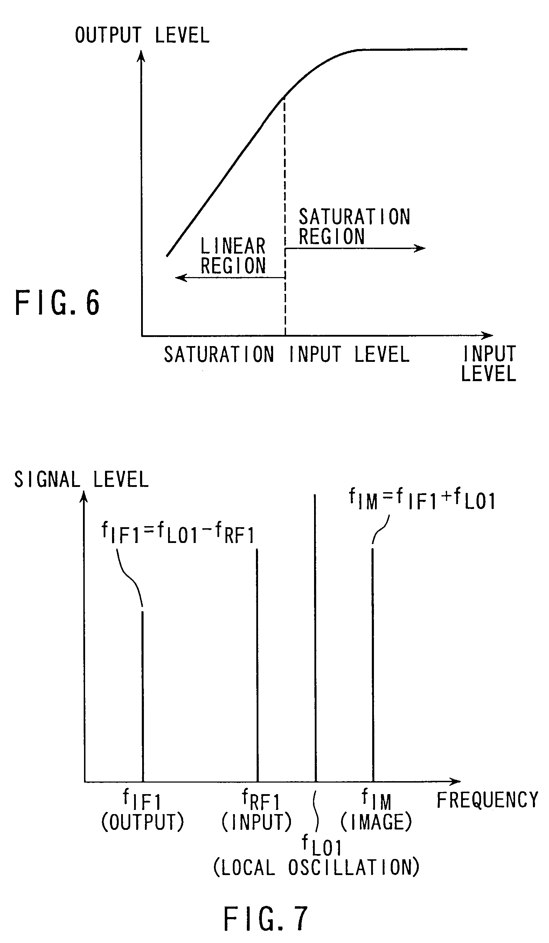

FIG. 6 is a graph showing the general input-to-output characteristic (saturation characteristic) of the reception RF amplifier 107. The abscissa represents the input level, and the ordinate represents the output level.

In the "linear region" shown in FIG. 6, i.e., the region where the input level is lower than the "saturation input level", the input-to-output characteristic of the reception RF amplifier 107 exhibits a linear characteristic. However, in the "saturation region" where the input level exceeds the "saturation input level" shown in FIG. 6, the input-to-output characteristic of the reception RF amplifier 107 does not exhibit the linear characteristic anymore. In this region, both the amplitude component and phase component of an input signal cannot hold necessary information in the amplifier output, and the demodulated signal has errors. That is, when the level of input signal to the reception RF amplifier 107 exceeds the "saturation input level", and the reception RF amplifier 107 operates in the saturation region, the radio characteristic degrades.

A case wherein degradation in radio characteristic due to saturation of the reception RF amplifier 107 is caused by interference between the radio units will be described next. A description will be made herein by exemplifying degradation in radio characteristic, which occurs when a signal transmitted by the transmission/reception antenna 104 of the second radio unit 12 interferes with the reception RF amplifier 107 of the first radio unit 11.

When a signal input to the transmission/reception antenna 104 of the second radio unit 12 interferes with the transmission/reception antenna 102 of the first radio unit 11 by spatial or conductive interference, the signal transmitted from the transmission/reception antenna 104 of the second radio unit 12 is input to the duplexer 106 through the transmission/reception antenna 102 of the first radio unit 11.

The signal input to the duplexer 106 falls outside the reception radio frequency band and therefore attenuates in the duplexer 106. However, signal components that have not completely attenuated are directly input to the reception RF amplifier 107. If the level of signal that has interfered with the transmission/reception antenna 102 of the first radio unit 11 is high, and the level after attenuation by the duplexer 106 is higher than the saturation input level of the reception RF amplifier 107, the reception RF amplifier 107 operates in the saturation region. At this time, even when the transmission/reception antenna 102 of the first radio unit 11 receives a desired signal, the amplitude and phase components of the desired signal are not correctly amplified because the reception RF amplifier 107 is operating in the saturation region. For this reason, errors are generated in the demodulated signal, resulting in degradation in radio characteristic.

As described above, when interference between the two transmission/reception antennas is large, the reception RF amplifier saturates to degrade the radio characteristic.

The first example of degradation in radio characteristic due to interference between the radio units has been described above.

As the second example, an example of degradation in sensitivity due to an image signal will be described by exemplifying a degradation in sensitivity in the output from the reception mixer 109.

FIG. 7 is a graph showing the frequency relationship between the input and output signals of the reception mixer. Referring to FIG. 7, a frequency $f_{RF1}$ is the reception radio frequency of the first radio unit as a desired wave, a frequency $f_{LO1}$ is the local oscillation signal frequency of the first radio unit, and a frequency $f_{IF1}$ is the reception intermediate frequency of the first radio unit.

The reception mixer 109 receives signals having the reception radio frequency $f_{RF1}$ and local oscillation signal frequency $f_{LO1}$ and generates an intermediate frequency signal having the frequency $f_{IF1}$ given by

$$f_{IF1} = f_{LO1} - f_{RF1}$$

for $f_{LO1} > f_{RF1}$

As described above, the reception mixer 109 outputs a signal having a frequency corresponding to the difference between the input signal and the local oscillation signal. For this reason, when an undesired signal having a frequency $f_{IM}$ shown in FIG. 6, i.e., a

frequency component having a relationship

$f_{IM} = f_{LO1} + f_{IF1}$ between the reception intermediate frequency $f_{IF1}$ and local oscillation signal frequency $f_{LO1}$ is input, this signal becomes a signal having the frequency component $f_{IF1}$ in the output from the reception mixer 109. This signal has the same frequency as that of the desired signal. For this reason, this signal is not removed by filtering in blocks following the reception mixer 109 and reaches the demodulator 112. The signal acts as noise in demodulation to cause errors. That is, when a signal having a frequency $f_{IM} = f_{LO1} + f_{IF1}$ is input to the reception mixer 109, the radio characteristic degrades.

A case wherein the degradation in radio characteristic due to an image signal is caused by interference between the radio units will be described. A description will be made herein by exemplifying degradation in radio characteristic, which occurs when a signal transmitted by the transmission/reception antenna 104 of the second radio unit 12 interferes with the transmission/reception antenna 102 of the first radio unit 11 and is input to the reception mixer 109.

When a signal input to the transmission/reception antenna 104 of the second radio unit 12 interferes with the transmission/reception antenna 102 of the first radio unit 11 by spatial or conductive interference, the signal transmitted from the transmission/reception antenna 104 of the second radio unit 12 is input to the duplexer 106 through the transmission/reception antenna 102 of the first radio unit 11. The signal input to the duplexer 106 falls outside the reception radio frequency band and therefore attenuates in the duplexer 106. However, signal components that have not completely attenuated in the duplexer 106 are directly input to the reception RF amplifier 107. The reception RF filter 108 removes signal components outside the band from the signal amplified by the reception RF amplifier 107. After that, the signal is input to the reception mixer 109. At this time as well, signal components that have not been completely attenuated in the reception RF filter 108 are directly input to the reception mixer 109.

When a reception radio frequency band $f_{RF2}$ used by the second radio unit 12 serves as the image signal frequency in the first radio unit, i.e., a relationship

$$f_{RF2} = f_{L01} + f_{IF1}$$

holds between the reception intermediate frequency $f_{IF1}$ used by the first radio unit 11 and the local oscillation signal frequency $f_{LO1}$ used by the first radio unit 11, the image signal input to the reception mixer 109 becomes a signal having the frequency component $f_{IF1}$ in the output from the reception mixer 109. This signal has a frequency equal to that obtained by frequency-converting the desired signal of the first radio unit 11 by the reception mixer 109. Hence, the signal reaches the demodulator 112 without being removed by filtering in blocks following the reception mixer 109 and acts as noise in demodulation to cause errors.

As described above, when interference between the two transmission/reception antennas is large, a noise component is generated in the reception mixer output due to the image signal to degrade the radio characteristic.

The second example of degradation in radio characteristic due to interference between the radio units has been described above.

It is an object of the present invention to prevent interference between such two radio units, and the detailed arrangement of each embodiments will be described below.

(First Embodiment)

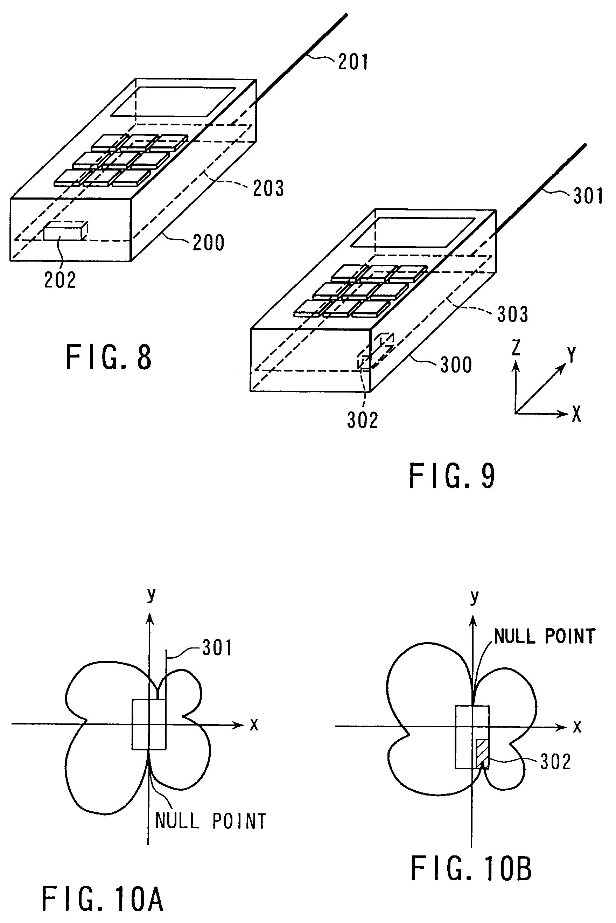

FIG. 8 is a view showing the antenna mounting structure of a mobile communication terminal according to the first embodiment of the present invention. An example in which monopole antennas are used as the first and second transmission/reception antennas, and one of the transmission/reception antennas is incorporated will be described.

The mobile communication terminal shown in FIG. 8 comprises a case 200 of the mobile communication terminal, a first transmission/reception antenna (monopole antenna) 201, a second transmission/reception antenna (incorporated monopole antenna) 202, and a printed board 203 on which the transmission/reception circuits and transmission/reception antennas are mounted. Although not illustrated, the first antenna transmission/reception unit 201 and second antenna transmission/reception unit 202 are connected to the transmission/reception circuit sections in the arrangements shown in FIGS. 5A and 5B.

The first transmission/reception antenna 201 is the antenna for the first radio unit for establishing radio communication with a base station, and the second transmission/reception antenna 202 is the antenna for the second radio unit for establishing radio communication with another communication terminal by Bluetooth.

As a characteristic feature of the first embodiment, the first transmission/reception antenna 201 and second transmission/reception antenna 202 are arranged at separate positions not to interfere with each other. More specifically, the first transmission/reception antenna 201 and second transmission/reception antenna 202 are arranged at different end portions in the longitudinal direction of the case 200.

The interference amount between the antennas largely depends on the distance and exponentially attenuates as the distance between the objects increases. Hence, when the first transmission/reception antenna 201 and second transmission/reception antenna 202 are spaced apart from each other by a sufficient distance, as shown in FIG. 8, both spatial interference and conductive interference as described above with reference to FIGS. 4A and 4B can be reduced, and consequently, degradation in radio characteristic due to interference between the two radio units can be prevented.

In the above description, the first transmission/reception antenna 201 is an external monopole antenna, and the second transmission/reception antenna 202 is an incorporated monopole antenna. However, each antenna can have an arbitrary structure such as inverted F-type antenna or microstrip antenna, and either incorporated antenna or external antenna can be used.

(Second Embodiment)

The second embodiment of the present invention will be described next.

FIG. 9 is a view showing the antenna mounting structure of a mobile communication terminal according to the second embodiment of the present invention. As in FIG. 8, an example in which monopole antennas are used as the first and second transmission/reception antennas, and one of the transmission/reception antennas is incorporated will be described.

Referring to FIG. 9, reference numeral 300 denotes a case of a mobile communication terminal; 301, a first transmission/reception antenna (monopole antenna); 302, a second transmission/reception antenna (incorporated monopole antenna); and 303, a printed board on which the transmission/reception circuits and transmission/reception antennas are mounted.

The first transmission/reception antenna 301 is the antenna for the first radio unit for establishing radio communication with a base station, and the second transmission/reception antenna 302 is the antenna for the second radio unit for establishing radio communication with another communication terminal by Bluetooth.

As a characteristic feature of the second embodiment, the two antennas are so arranged that the radiation pattern of the first transmission/reception antenna 301 has a null directed to the second transmission/reception antenna 302 while the radiation pattern of the second transmission/reception antenna 302 has a null directed to the first transmission/reception antenna 301.

FIGS. 10A and 10B show the radiation patterns of the transmission/reception antennas.

FIG. 10A is a view showing the radiation pattern of the first transmission/reception antenna 301, and FIG. 10B is a view showing the radiation pattern of the second transmission/reception antenna 302.

When one of the antennas 301 and 302 is arranged in the direction close to the null point of the radiation pattern of the other antenna, the first transmission/reception antenna 301 radiates small power in the direction of second transmission/reception antenna 302 and also receives small power from the second transmission/reception antenna 302. Similarly, the second transmission/reception antenna 302 radiates small power in the direction of first transmission/reception antenna 301 and receives small power from the first transmission/reception antenna 301. That is, when one of the antennas 301 and 302 is arranged in the direction of null point of the radiation pattern of the other antenna, a radio wave radiated from one antenna can be prevented from runarounding the other antenna.

Hence, spatial interference as one element of interference between the antennas, which has been described with reference to FIG. 4A, can be reduced, and consequently, degradation in radio characteristic due to interference between the radio units can be prevented.

When monopole antennas are used for both of the first and second transmission/reception antennas 301 and 302, and the antennas 301 and 302 are laid out on an almost straight line on the case, as shown in FIG. 9, one of the antennas 301 and 302 is arranged in the direction close to the null point of the radiation pattern of the other antenna, so spatial interference can be reduced, as described above.

In addition, the first and second transmission/reception antennas 301 and 302 need not completely match the null points. The desired effect can be obtained only by arranging the first and second transmission/reception antennas 301 and 302 near the null points, as shown in FIGS. 10A and 10B.

(Third Embodiment)

The third embodiment of the present invention will be described next.

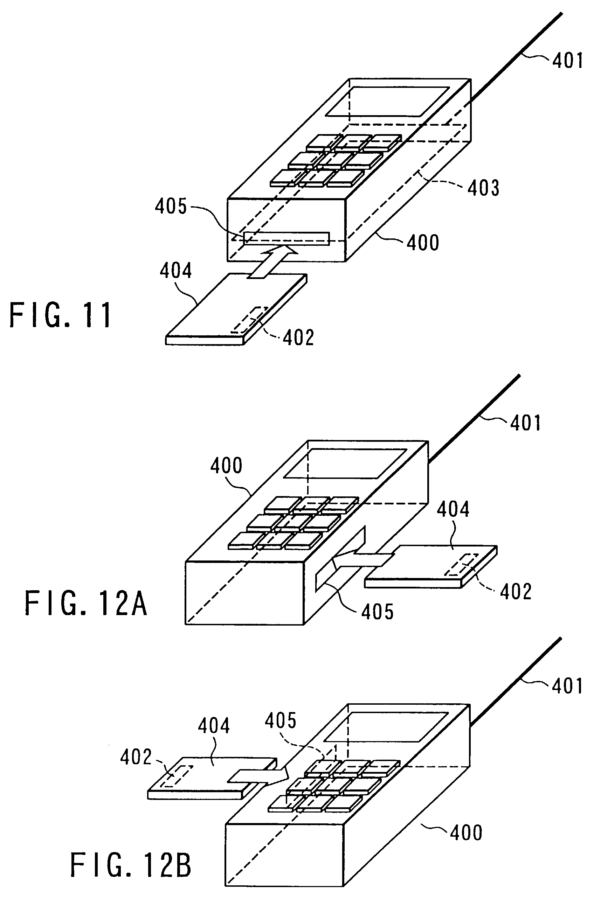

FIG. 11 is a view showing the antenna mounting structure of a mobile communication terminal according to the third embodiment of the present invention.

The mobile communication terminal shown in FIG. 11 comprises a case 400 of the mobile communication terminal, a first transmission/reception antenna (monopole antenna) 401, a second transmission/reception antenna 402, a printed board 403 on which transmission/reception circuits and transmission/reception antennas are mounted, a card-type radio unit 404, and a card slot 405.

The first transmission/reception antenna 401 is the antenna for the first radio unit for establishing radio communication with a base station, and the second transmission/reception antenna 402 is the antenna for the second radio unit for establishing radio communication with a radio station or another communication terminal.

As a characteristic feature of the third embodiment, the first radio unit is incorporated in the case 400, and the second radio unit is detachably attached to the case 400. More specifically, the second radio unit is mounted on a card-shaped member such as a PC card, and the card-type radio unit 404 is inserted through the card slot 405 formed in a side surface of the case 400.

The card-type radio unit 404 has the second transmission/reception antenna 402 and transmission/reception circuit of the second radio unit. The card-type radio unit 404 inserted into the card slot 405 is electrically connected to the printed board 403 in the case 400 and operates as the second radio unit. The printed board 403 in the case 400 has the first transmission/reception antenna 401 or transmission/reception circuit as components of the first radio unit.

When the second radio unit is detachably attached to the case 400 using the card-type radio unit 404, the ground pattern on the printed board on which the second radio unit is mounted can be physically separated from that on the printed board on which the first radio unit is mounted. When the two ground patterns are separated, a current generated when one radio unit is operated does not flow into the other radio unit through the interconnection pattern. Hence, conductive interference as described with reference to FIG. 4B can be reduced, and consequently, degradation in radio characteristic due to interference between the radio units can be prevented.

The direction in which the card-type radio unit 404 is inserted into the case 400 is not limited to that shown in FIG. 11. As shown in FIGS. 12A and 12B, the card-type radio unit 404 can be inserted into an arbitrary direction. In this case, spatial interference and conductive interference can be reduced when the two antennas are spaced apart from each other by a distance as long as possible, as described in the first embodiment (FIG. 8). Hence, in this embodiment as well, interference between the radio units can be further reduced by properly designing the card insertion position or the mounting position of the second transmission/reception antenna 402 in the card such that the first transmission/reception antenna 401 is spaced apart from the second transmission/reception antenna 402 when the card-type radio unit 404 is inserted into the case 400.

As described in the second embodiment (FIG. 9 and FIGS. 10A and 10B), when a radiation pattern of one of the two antennas has a null directed close to the other antenna, spatial interference can be reduced. Hence, in this embodiment as well, interference between the radio units can be further reduced by properly designing the card insertion position or the mounting position of the second transmission/reception antenna 402 in the card such that the radiation pattern of one of the first and second transmission/reception antennas 401 and 402 has a null directed close to the other antenna when the card-type radio unit 404 is inserted into the case 400.

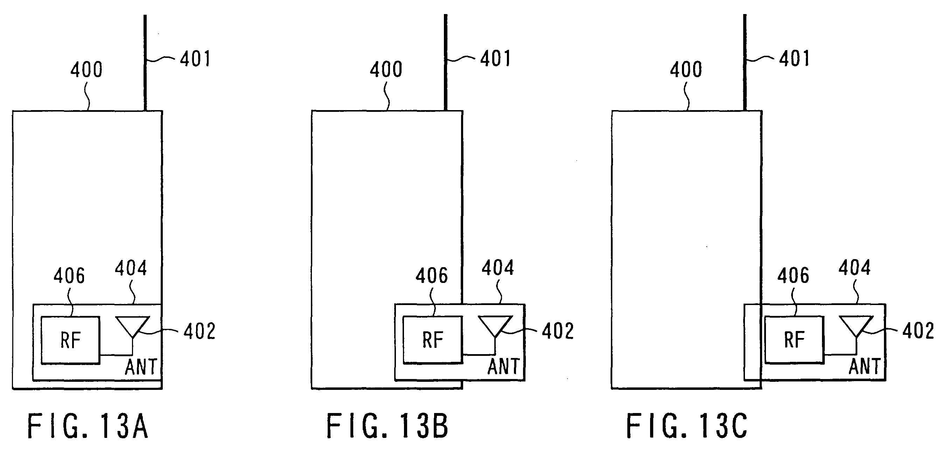

The insertion form of the card-type radio unit 404 can also be arbitrary, as shown in FIGS. 13A through 13C.

In the example shown in FIG. 13A, both a transmission/reception circuit section 406 and second transmission/reception antenna 402, which are mounted on the card-type radio unit 404, are accommodated in the case 400 (full card insertion). In the example shown in FIG. 13B, of the transmission/reception circuit section 406 and second transmission/reception antenna 402, which are mounted on the card-type radio unit 404, only the transmission/reception circuit section 406 is accommodated in the case 400 (partial card insertion). In the example shown in FIG. 13C, both the transmission/reception circuit section 406 and second transmission/reception antenna 402, which are mounted on the card-type radio unit 404, are located outside the case 400 (partial card insertion). In any insertion form, when the card-type radio unit 404 is inserted into the case 400, the card-type radio unit 404 is electrically connected to the printed board 403 in the case 400 by a connector or the like (not shown).

In this embodiment, the second radio unit has a detachable card-like structure. However, even when the first radio unit has a detachable card-like structure, the above-described separation of the ground patterns of the two printed boards is possible, and consequently, interference between the radio units can be reduced. However, the first radio unit (e.g., cellular phone) is used for radio communication with a base station and must immediately respond to an external communication request. Hence, it is preferable for practical use that the first radio unit be incorporated in the case while the second radio unit have a detachable card-like structure.

In addition, the second radio unit (e.g., Bluetooth) communicates with another communication terminal using a specific radio wave and is used in only a predetermined radio area such as an office or home. Hence, when the user goes out, and the second radio unit becomes unnecessary, the second radio unit having a detachable card-like structure can be detached from the case to reduce the weight of the entire case. The card can be attached and used only when it is necessary.

(Fourth Embodiment)

The fourth embodiment of the present invention will be described next.

In the third embodiment, one of the radio units has a detachable card-like structure, and the ground patterns of the two printed boards are separated to reduce interference between the two antennas. To separate the ground patterns, separate printed boards may be prepared for the first and second radio units to separate the ground patterns, or the ground patterns of the first and second radio units may be separated on a single printed board, instead of using a detachable radio unit.

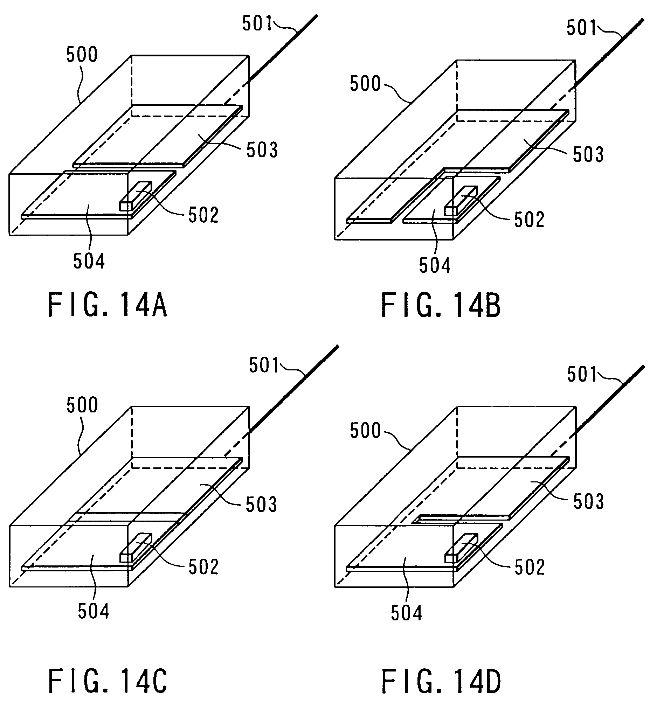

FIGS. 14A through 14D are views showing the antenna mounting structures of a mobile communication terminal according to the fourth embodiment of the present invention.

Each of mobile communication terminals shown in FIGS. 14A through 14D comprises a case 500 of the mobile communication terminal, a first transmission/reception antenna (monopole antenna) 501, a second transmission/reception antenna 502, a printed board 503 on which the transmission/reception circuit and transmission/reception antenna of the first radio unit are mounted, and a printed board 504 on which the transmission/reception circuit and transmission/reception antenna of the second radio unit are mounted.

In the example shown in FIG. 14A or 14B, in the case 500, the printed board 503 having the first transmission/reception antenna 501 and the like and the printed board 504 having the second transmission/reception antenna 502 and the like are individually arranged as separate boards. When the printed boards are individually arranged as separate boards, the ground patterns of the first and second radio units can be physically separated. Since this makes it possible to cut off the path of a current flowing on the ground patterns of the two radio units, conductive interference between the radio units can be reduced, as in the third embodiment which employs the detachable structure (FIGS. 12A and 12B and FIGS. 13A through 13C).

In the example shown in FIG. 14C, in the case 500, the printed board 503 having the first transmission/reception antenna 501 and the like and the printed board 504 having the second transmission/reception antenna 502 and the like are arranged as a single board, and the ground patterns of the two radio units are formed at separate positions on the board. Even when the ground patterns of the two radio units are separated on the single board in this way, the path of a current flowing on the ground patterns of the radio units can be cut off. Hence, conductive interference between the radio units can be reduced, as in the third embodiment which employs the detachable structure (FIGS. 12A and 12B and FIGS. 13A through 13C).

In the example shown in FIG. 14D, in the case 500, the printed board 503 having the first transmission/reception antenna 501 and the like and the printed board 504 having the second transmission/reception antenna 502 and the like are arranged as a single board, and a notch is formed between the radio units on this board to separate the ground patterns. Even when the ground patterns of the radio units are separated by forming a notch in the single board in the above way, the path of a current flowing on the ground patterns of the radio units can be cut off. Hence, conductive interference between the radio units can be reduced, as in the third embodiment which employs the detachable structure (FIGS. 12A and 12B and FIGS. 13A through 13C).

As described in the first embodiment (FIG. 8), spatial interference and conductive interference can be reduced when the two antennas are possibly spaced apart from each other. Hence, in the fourth embodiment as well, when the printed board 503 having the first transmission/reception antenna 501 and the like and the printed board 504 having the second transmission/reception antenna 502 and the like are integrally or separately arranged by designing the mounting positions of the two antennas such that the first transmission/reception antenna 501 and second transmission/reception antenna 502 are spaced apart from each other, interference between the radio units can be further reduced.

In addition, as described in the second embodiment (FIG. 9 and FIGS. 10A and 10B), when each antenna is arranged such that the radiation pattern of one of the two antenna has a null directed close to the other antenna, spatial interference can be reduced. Hence, in the fourth embodiment as well, when the printed board 503 having the first transmission/reception antenna 501 and the like and the printed board 504 having the second transmission/reception antenna 502 and the like are integrally or separately arranged by designing the mounting positions of the two antennas such that the radiation pattern of one of the first transmission/reception antenna 501 and second transmission/reception antenna 502 has a null directed close to the other antenna, interference between the radio units can be further reduced.

As has been described above, when the antenna mounting structures described in the above embodiments are employed, both or one of spatial interference and conductive interference as elements of interference between the radio units can be reduced. Hence, for example, in a terminal apparatus having a radio unit for cellular phone and a radio unit for Bluetooth in a single case, the transmission signal of the Bluetooth can be prevented from interfering with the reception antenna and reception circuit of the cellular phone and influencing the reception signal of the cellular phone. Hence, satisfactory communication can be performed simultaneously using the two radio units.

**Claims**

1. A mobile communication apparatus having, in a single case (200),

   first radio communication means (11) constructed by a first transmission/reception circuit section (103) and first transmission/reception antenna (102, 201) to perform radio communication with a base station using a first radio frequency band, and
   second radio communication means (12) constructed by a second transmission/reception circuit section (105) and second transmission/reception antenna (104, 202) to perform radio communication with a radio station or another communication apparatus of said first radio communication means using a second radio frequency band different from the first radio frequency band, characterized in that
   the first transmission/reception antenna of said first radio communication means and the second transmission/reception antenna of said second radio communication means are arranged at different end portions in a longitudinal direction of a case accommodating said first and second radio communication means (FIG. 8).

2. A mobile communication apparatus having, in a single case (200),

   first radio communication means (11) constructed by a first transmission/reception circuit section (103) and first transmission/reception antenna (102, 301) to perform radio communication with a base station using a first radio frequency band, and
   second radio communication means (12) constructed by a second transmission/reception circuit section (105) and second transmission/reception antenna (104, 302) to perform radio communication with a radio station or another communication apparatus of said first radio communication means using a second radio frequency band different from the first radio frequency band, characterized in that

the two antennas are so arranged in said case that a radiation pattern of the first transmission/reception antenna of said first radio communication means has a null directed to the second transmission/reception antenna of said second radio communication means, and a radiation pattern of the second transmission/reception antenna has a null directed to the first transmission/reception antenna of said first radio communication means (FIG. 9).

3. A mobile communication apparatus having, in a single case,

first radio communication means (403, 401) constructed by a first transmission/reception circuit section (103) and first transmission/reception antenna (102, 401) to perform radio communication with a base station using a first radio frequency band, and second radio communication means (402) constructed by a second transmission/reception circuit section (105) and second transmission/reception antenna (104, 402) to perform radio communication with a radio station or another communication apparatus of said first radio communication means using a second radio frequency band different from the first radio frequency band, characterized in that one of said first and second radio communication means is incorporated in said case, and the other radio communication means is detachable from said case (FIG. 11).

4. A mobile communication apparatus according to claim 3, characterized in that said other radio communication means is mounted in a separated card-shaped member and inserted into said case through a slot formed in said case.

5. A mobile communication apparatus according to claim 3 or 4, characterized in that said first radio communication means is incorporated in said case, and said second radio communication means is detachable from said case.

6. A mobile communication apparatus having, in a single case,

first radio communication means (503) constructed by a first transmission/reception circuit section and first transmission/reception antenna (501) to perform radio communication with a base station using a first radio frequency band, and second radio communication means (504) constructed by a second transmission/reception circuit section and second transmission/reception antenna (502) to perform radio communication with a radio station or another communication apparatus independently of said first radio communication means using a second radio frequency band different from the first radio frequency band, characterized in that a ground pattern of a printed board on which said first radio communication means is mounted and a ground pattern of a printed board on which said second radio communication means is mounted are separated from each other (FIGS. 14A - 14D).

7. An apparatus according to claim 6, characterized in that the printed board having said first radio communication means and the printed board having said second radio communication means are individually arranged in said case as separate boards.

8. An apparatus according to claim 6, characterized in that the printed board having said first radio communication means and the printed board having said second radio communication means are arranged in said case as one board, and the ground patterns of the printed boards are separately formed.

BASE STATION

RADIO NETWORK

PUBLIC NETWORK

MASTER

FIG. 1

FIG. 2

FIG. 3

FIG. 4A

FIG. 4B

FIG. 5A

FIG. 5B

EP 1 089 448 A2

OUTPUT LEVEL

SATURATION
REGION

LINEAR
REGION

FIG. 6

SATURATION INPUT LEVEL          INPUT
LEVEL

SIGNAL LEVEL

$f_{IF1} = f_{LO1} - f_{RF1}$

$f_{IM} = f_{IF1} + f_{LO1}$

$f_{IF1}$
(OUTPUT)

$f_{RF1}$
(INPUT)

$f_{IM}$
(IMAGE)

FREQUENCY

$f_{LO1}$
(LOCAL OSCILLATION)

FIG. 7

15

FIG. 8

FIG. 9

FIG. 10A

FIG. 10B

FIG. 11

FIG. 12A

FIG. 12B

FIG. 13A

FIG. 13B

FIG. 13C

500
501
503
502
504

**FIG. 14A**

500
501
503
502
504

**FIG. 14B**

500
501
503
502
504

**FIG. 14C**

500
501
503
502
504

**FIG. 14D**